# EUROPÄISCHE PATENTSCHRIFT

(11) **EP 3 416 853 B1**
(45) Veröffentlichungstag und Bekanntmachung des Hinweises auf die Patenterteilung: **19.08.2020**
(21) Anmeldenummer: 17702611.9
(22) Anmeldetag: 31.01.2017
(51) Int. Cl.: B60R 9/06, B60R 9/10

(54) **LASTENTRÄGERKUPPLUNG**
LOAD CARRIER COUPLING
DISPOSITIF D'ACCOUPLEMENT DE PORTE-CHARGE

(30) Priorität: 17.02.2016 DE 102016102812; 29.02.2016 DE 102016103596
(43) Veröffentlichungstag der Anmeldung: 26.12.2018
(73) Patentinhaber: WESTFALIA - Automotive GmbH, 33378 Rheda-Wiedenbrück (DE)
(72) Erfinder: CAKICI, Hakan, 33332 Gütersloh (DE); DÜKER, Martin, 33335 Gütersloh (DE); RÖRING, Stefan, 33602 Bielefeld (DE)
(74) Vertreter: Patentanwälte Bregenzer und Reule Partnerschaftsgesellschaft mbB
(86) Internationale Anmeldenummer: PCT/EP2017/052032
(87) Internationale Veröffentlichungsnummer: WO 2017/140492

(56) Entgegenhaltungen:
- EP-A1- 2 774 785
- EP-A2- 2 460 692
- DE-A1-102006 013 465
- DE-A1-102010 045 357
- NL-A- 9 301 797

## Beschreibung

Die Erfindung betrifft eine Lastenträgerkupplung zur lösbaren Festlegung eines eine Tragbasis zum Auflegen einer Last aufweisenden Hecklastenträgers an einem insbesondere als Kupplungskugel ausgestalteten Kuppelkörper einer Kraftfahrzeug-Anhängekupplung, gemäß dem Oberbegriff des Anspruchs 1.

Eine derartige Lastenträgerkupplung ist beispielsweise in DE 10 2010 045 357 A1 erläutert. Ein Klemmteil ist dabei von der Basis der Lastenträgerkupplung gebildet, während das andere Klemmteil anhand der Betätigungseinrichtung, die einen Betätigungshebel umfasst, relativ zu dem an der Basis ortsfesten Klemmteil verstellbar ist. Anhand einer Verstelleinrichtung, insbesondere einer Schraube, kann das bewegliche Klemmteil bezüglich des anderen Klemmteils justiert werden, sodass in der Klemmstellung der Kuppelkörper, insbesondere eine Kupplungskugel, sicher geklemmt werden kann. Allerdings ergibt sich in der Praxis das Problem, dass die Klemmteile auch bei justierter Verstelleinrichtung nicht in jedem Fall optimal an der Kupplungskugel anliegen.

Eine Lastenträgerkupplung gemäß NL 9 301 797 A umfasst ein an einem Stützteil beweglich gelagertes Klemmteil, an dem ein Spannorgan in Gestalt eines Spannbolzens angeordnet ist.

Es ist daher die Aufgabe der vorliegenden Erfindung, eine verbesserte Lastenträgerkupplung bereitzustellen.

Zur Lösung der Aufgabe ist bei einer Lastenträgerkupplung der eingangs genannten Art vorgesehen, dass mindestens eines der Klemmteile anhand einer Lageranordnung mit mindestens zwei voneinander verschiedenen Bewegungsfreiheitsgraden bezüglich mindestens einer Anschlagfläche beweglich gelagert ist, so dass es durch den sich am anderen Klemmteil abstützenden Kuppelkörper zu einer Ausrichtung an dem Kuppelkörper während eines letzten Bewegungsabschnitts der Klemmeinrichtung zur Einnahme der Klemmstellung bezüglich der mindestens einen Anschlagfläche verstellbar ist.

Es ist dabei ein Grundgedanke, dass mindestens eines der Klemmteile sozusagen schwimmend anhand der Lageranordnung gelagert ist, sodass der Klemmkörper dieses Klemmteil bezüglich der Anschlagfläche in eine geeignete Ausrichtung bringen kann, bei der die Klemmflächen des Klemmkörpers optimal an dem Kuppelkörper anliegen, beispielsweise kugelkalottenartigen Klemmflächen an einem als Kupplungskugel ausgestalteten Kuppelkörper.

Das Bewegungsspiel, welches das Klemmteil in Bezug auf die mindestens eine Anschlagfläche hat, dient also zweckmäßigerweise nicht dazu, das Klemmteil zwischen der Offenstellung und der Klemmstellung zu bewegen, sondern zur Ausrichtung des Klemmteils relativ zum Kuppelkörper.

Ein Stellweg, der bei einem Klemmteil zur Verstellung zwischen der Offenstellung und der Klemmstellung vorgesehen ist, ist zweckmäßigerweise nicht oder allenfalls zu einem geringen Prozentsatz von weniger als oder maximal 10 % Bestandteil der Bewegung des Klemmteils bei der Ausrichtung bezüglich des Kuppelkörpers und der mindestens einen Anschlagfläche.

Zweckmäßig ist es, wenn die Verstellbewegung des Klemmteils relativ zu der Anschlagfläche bei dem letzten Bewegungsabschnitt der Klemmeinrichtung in einem Bereich von etwa 1% bis 5 %, höchstens 10 %, des Stellweges ist, den das bezüglich der Anschlagfläche anhand der Lageranordnung bewegliche Klemmteil oder das diesem Klemmteil gegenüberliegende Klemmteil bei der Verstellung der Klemmeinrichtung zwischen der Offenstellung und der Klemmstellung durchläuft.

Ein vorteilhafter Effekt ist beispielsweise, dass durch die optimale Anlage des mindestens einen Klemmteils oder möglichst beider Klemmteile an dem Kuppelkörper ein guter Halt der Lastenträgerkupplung an der Anhängekupplung erzielt wird. Ferner ist es zweckmäßig, wenn im Sinne der Erfindung erzielt wird, dass die Klemmteile und der Kuppelkörper relativ zueinander wenig Spiel haben und/oder großflächig aneinander anliegen, was den Verschleiß mindert. Insbesondere ist eine Beschädigung der Anhängekupplung und deren Kuppelkörper nicht zu befürchten oder wird jedenfalls deutlich minimiert. Vorteilhaft ist bei einer Lastenträgerkupplung gemäß der Erfindung oder auch gemäß Oberbegriff des Anspruchs 1 vorgesehen, dass mindestens eines der Klemmteile in der Klemmstellung der Klemmeinrichtung anhand einer Lageranordnung mit mindestens zwei voneinander verschiedenen Bewegungsfreiheitsgraden bezüglich einer insbesondere an einem einstellbaren Anschlagelement vorgesehenen Anschlagfläche beweglich gelagert ist, so dass es durch den sich am anderen Klemmteil abstützenden Kuppelkörper relativ zu dem Anschlagelement verstellbar ist.

Es ist möglich, dass die mindestens eine Anschlagfläche eine oder mehrere ortsfeste Anschlagflächen umfasst. Die mindestens eine Anschlagfläche kann gemäß einer Variante der Erfindung beispielsweise ortsfest an der Basis vorgesehen sein, beispielsweise an einem Basisgehäuse. Es ist auch eine Anschlagfläche gemäß einer anderen Variante der Erfindung an einem Bedienhebel oder einem Kraftübertragungselement der Betätigungseinrichtung zur Betätigung eines Klemmteils möglich.

Bevorzugt ist oder umfasst die mindestens eine Anschlagfläche gemäß einer weiteren Variante der Erfindung mindestens eine bewegliche oder einstellbare Anschlagfläche. An dieser Stelle sei bemerkt, dass eine oder mehrere Anschlagflächen vorhanden sein können.

Erfindungsgemäss ist vorgesehen, dass die mindestens eine Anschlagfläche eine an einem zur Einstellung eines Abstands zwischen den Klemmteilen in der Klemmstellung verstellbaren Anschlagelement angeordnete Anschlagfläche umfasst oder dadurch gebildet ist. Das Anschlagelement umfasst beispielsweise eine Stellschraube oder eine sonstige Stellkontur, die beispielsweise an der Basis der Lastenträgerkupplung oder auch an der Betätigungseinrichtung oder einem Übertragungsgetriebe zwischen der Betätigungseinrichtung und dem durch die Betätigungseinrichtung betätigbaren Klemmteil angeordnet ist. Beispielsweise ist das Anschlagelement in einer Schraubaufnahme an der Basis verschraubbar aufgenommen. Es ist auch möglich, dass ein Anschlagelement beispielsweise in verschiedenen Positionen mit der Basis oder einem Kraftübertragungselement der Betätigungseinrichtung verklemmbar oder verrastbar ist, sodass eine Relativposition der durch das Anschlagelement bereitgestellten Anschlagfläche zu der Basis oder dem Kraftübertragungselement einstellbar ist.

Prinzipiell ist es möglich, dass nur eines der Klemmteile im Sinne der Erfindung mit zwei oder weiteren Bewegungsfreiheitsgraden zur Ausrichtung durch und/oder an dem Kuppelkörper der Anhängekupplung beweglich gelagert ist, während das andere Klemmteil beispielsweise ortsfest an der Basis angeordnet oder durch die Betätigungseinrichtung zwischen der Klemmstellung und der Offenstellung verstellbar ist, jedoch keine derartiges zur Ausrichtung am Kuppelkörper geeignetes Bewegungsspiel aufweist.

Es ist auch möglich, dass beide Klemmteile im Sinne der Erfindung ein Bewegungsspiel haben, das heißt in Bezug auf die mindestens eine Anschlagfläche mindestens zwei Bewegungsfreiheitsgrade anhand der Lageranordnung aufweisen, sodass jedes der Klemmteile kurz vor Erreichen der Klemmstellung durch den Kuppelkörper, insbesondere die Kupplungskugel, der Anhängekupplung ausrichtbar sind.

Vorteilhaft ist vorgesehen, dass die Lageranordnung und die mindestens eine Anschlagfläche sowie das anhand der Lageranordnung gelagerte Klemmteil an der Basis angeordnet sind und das andere Klemmteil durch die Betätigungseinrichtung zwischen der Klemmstellung und der Offenstellung verstellbar ist.

Bevorzugt ist eine Konfiguration, bei der das durch die Betätigungseinrichtung betätigbare Klemmteil nur eine zur Betätigung notwendige Beweglichkeit, beispielsweise eine drehbewegliche Lagerung bezüglich der Basis aufweist, sodass es zwischen der Klemmstellung und der Offenstellung betätigbar ist. Das andere Klemmteil ist anhand der Lageranordnung bezüglich der Basis der Lastenträgerkupplung beweglich gelagert, jedoch durch die Betätigungseinrichtung nicht zwischen der Offenstellung und der Klemmstellung verstellbar.

Es ist allerdings möglich, dass die Betätigungseinrichtung zur Verstellung beider Klemmteile zwischen der Klemmstellung und der Offenstellung vorgesehen ist. Beispielsweise können die Klemmteile in der Art einer Klammer oder einer Schere durch die Betätigungseinrichtung in die Offenstellung voneinander weg und in die Klemmstellung zueinander hin betätigbar sein.

Die mindestens zwei Bewegungsfreiheitsgrade können verschiedene Bewegungsfreiheitsgraden umfassen.

So ist vorzugsweise vorgesehen, dass mindestens zwei Translationsfreiheitsgrade entlang zueinander winkeliger, insbesondere rechtwinkelige, Translationsachsen umfassen. Bevorzugt ist eine Verschieblichkeit oder translatorische Beweglichkeit drei Richtungen oder entlang dreier Translationsachsen. Beispielsweise kann das Klemmteil anhand der Lageranordnung entlang dreier zueinander jeweils rechtwinkliger oder kartesischer Achsen beweglich sein.

Weiterhin können auch mindestens zwei Rotationsfreiheitsgrade vorgesehen sein, d.h. dass das Klemmteil beispielsweise um zwei Rotationsachsen schwenkbar anhand der Lageranordnung gelagert ist.

Vorteilhaft ist vorgesehen, dass die mindestens zwei Bewegungsfreiheitsgrade mindestens einen Translationsfreiheitsgrad und mindestens einen Rotationsfreiheitsgrad umfassen. Es ist möglich, dass sich dieser Translationsfreiheitsgrad und der Rotationsfreiheitsgrad auf ein und dieselbe Achse beziehen, d.h. dass das Klemmteil um dieselbe Achse schwenkbar und translatorisch verstellbar bzw. verschiebbar ist.

Bevorzugt ist es, wenn das sich an der mindestens einen Anschlagfläche abstützende Klemmteil anhand der Lageranordnung um eine Schwenkachse schwenkbar und eine Schiebeachse verschieblich gelagert ist. Die Schiebeachse und die Schwenkachse sind z.B. koaxial oder zueinander winkelig.

Eine Konfiguration sieht beispielsweise vor, dass die Lageranordnung ein kombiniertes Schwenklager und Schiebelager oder ein Schwenkschiebelager umfasst, anhand dessen das mindestens eine Klemmteil um eine durch ein Schwenkachsteil verlaufende Schwenkachse schwenkbar ist. Das Schwenkachsteil selbst wiederum ist entlang einer Schiebeachse verschieblich in einer Lageraufnahme aufgenommen. Die Schiebeachse verläuft quer, insbesondere etwa rechtwinkelig oder exakt rechtwinkelig quer zur Schwenkachse. Mithin kann also das Klemmteil beispielsweise mit dem Schwenkachsteil entlang der Lageraufnahme verschoben werden.

Zweckmäßigerweise ist vorgesehen, dass die mindestens eine Anschlagfläche eine an einer Lageraufnahme der Lageranordnung angeordnete Lagerfläche umfasst. Beispielsweise ist ein Lagerbolzen oder eine Lagerachse der Lageranordnung in der Lageraufnahme drehbar und verschieblich gelagert. In der Klemmstellung stützt sich der Lagerbolzen oder die Lagerachse an der Lageraufnahme ab.

Es ist weiterhin möglich, dass das Klemmteil bezüglich des Lagerbolzens drehbar und/oder verschieblich ist. Somit kann beispielsweise ein weiterer Bewegungsfreiheitsgrad erzielt werden. Es ist aber auch möglich, dass die mindestens zwei Bewegungsfreiheitsgrade dadurch erzielt werden, dass das Klemmteil an einem Lagerbolzen verschieblich und drehbar gelagert ist.

Die mindestens eine Lagerfläche umfasst beispielsweise ein Langloch oder ist in einem Langloch angeordnet.

Vorteilhaft ist es, wenn mindestens eines der Klemmteile, insbesondere dasjenige, welches nicht bezüglich der Anschlagfläche ausrichtbar ist, durch die Betätigungseinrichtung betätigbar und um eine Schwenkachse schwenkbar zwischen der Offenstellung und der Klemmstellung der Klemmeinrichtung gelagert ist. Die Schwenkachse ist beispielsweise bezüglich der Basis der Lastenträgerkupplung, insbesondere bezüglich eines Basisgehäuses der Lastenträgerkupplung, ortsfest.

An dieser Stelle sei bemerkt, dass es ohne weiteres auch möglich ist, dass die Betätigungseinrichtung ein Klemmteil zwischen der Offenstellung und der Klemmstellung der Klemmeinrichtung zum Beispiel translatorisch verstellt oder kombiniert translatorisch und rotatorisch. Beispielweise ist es auch möglich, dass das Klemmteil durch die Betätigungseinrichtung entlang einer Kurve zwischen der Offenstellung und der Klemmstellung betätigbar ist, zum Beispiel anhand einer entsprechenden Kurvensteuerung. Mithin weist also die Lastenträgerkupplung in diesem Fall eine Kurvensteuerung auf. Eine passende Ausführungsform ist beispielsweise in der eingangs genannten DE 10 2010 045 357 A1 erläutert.

Eine vorteilhafte Ausführungsform sieht vor, dass eine Schwenkachse der Lageranordnung, um die das bezüglich der Anschlagfläche verstellbare Klemmteil schwenkbar ist, winkelig, beispielweise rechtwinkelig oder etwa rechtwinkelig, zu einer Schwenkachse ist, um die das andere Klemmteil zwischen der Offenstellung und der Klemmstellung der Klemmeinrichtung verschwenkbar ist. Somit schwenkt also das eine Klemmteil zwischen der Offenstellung und der Schließstellung beispielsweise um eine bei Gebrauch der Lastenträgerkupplung etwa horizontale Schwenkachse, während das andere Klemmteil, welches durch den Kuppelkörper bezüglich der mindestens einen Anschlagfläche ausgerichtet wird, um eine etwa vertikale Schwenkachse schwenkt. Dadurch ist eine besonders günstige Positionierung des Kuppelkörpers zwischen den Klemmteilen möglich. Es ist aber prinzipiell auch möglich, dass die Schwenkachsen der beiden Klemmteile parallel zueinander verlaufen, beispielsweise bei Gebrauch der Lastenträgerkupplung etwa horizontale. Beispielsweise sind die Schwenkachsen in diesem Fall vorteilhaft in einem bei Gebrauch oberen Bereich der Basis der Lastenträgerkupplung angeordnet.

Vorteilhaft ist es, wenn die Betätigungseinrichtung ein Übertotpunkt-Getriebe aufweist. Bevorzugt ist beispielsweise eine Gelenkanordnung als Bestandteil einer Betätigungseinrichtung.

Die Betätigungseinrichtung umfasst zweckmäßigerweise mindestens einen Betätigungshebel. Beispielsweise hat der Betätigungshebel einen Betätigungsarm.

Eine Gelenkanordnung oder ein sonstiges Kraftübertragungsgetriebe kann zweckmäßigerweise im Sinne einer Kraftverstärkung von einem Handgriffelement der Betätigungseinrichtung auf das durch die Betätigungseinrichtung betätigte Klemmteil wirken.

Eine vorteilhafte Ausgestaltung der Erfindung stellt es dar, wenn die Lastenträgerkupplung eine Betätigungseinrichtung aufweist, die eine Gelenkanordnung aufweist, welche mindestens ein Klemmteil in der Klemmstellung in einer Übertotpunkt-Lage hält, wobei die Gelenkanordnung mindestens einen Übertotpunkt-Anschlag, insbesondere in Gestalt eines Achselements, aufweist, an dem ein beim Verstellen des Klemmteils aus der Offenstellung in die Klemmstellung beweglicher Anschlagvorsprung eines Gelenkelements der Gelenkanordnung in der Übertotpunkt-Lage anschlägt. Der Grundgedanke dabei ist es, dass sozusagen in der Gelenkanordnung selbst der Übertotpunkt-Anschlag realisiert ist. Die Gelenkanordnung kann dadurch sehr präzise gefertigt werden.

Zweckmäßigerweise ist vorgesehen, dass mindestens ein Klemmteil, vorteilhaft beide Klemmteile, eine Formschlussaufnahme zum formschlüssigen Aufnehmen des Kuppelkörpers aufweist. Die Formschlussaufnahme hat also vorzugsweise eine Innenkontur, die zu einer Außenkontur des Kuppelkörpers passt. An dieser Stelle sei erwähnt, dass der Kuppelkörper zwar zweckmäßigerweise und in der Regel eine Kupplungskugel umfasst oder dadurch gebildet ist. Dementsprechend ist dann die Formschlussaufnahme zumindest partiell kugelförmig bzw. weist eine Innenfläche entsprechend einem Kugelmantel einer Hohlkugel auf.

Es ist aber grundsätzlich auch möglich, dass der Kuppelkörper eine andere Geometrie hat, beispielsweise polygonal, insbesondere quaderförmig, ist. In diesem Fall ist ebenfalls eine formschlüssige Aufnahme an mindestens einem der Klemmteile vorteilhaft. Gerade dann erweist sich der erfindungsgemäße Ansatz, dass der Kuppelkörper sozusagen in die Aufnahmekontur oder Formschlussaufnahme des Klemmteils sozusagen hinein findet, indem er das Klemmteil zur Einnahme der Klemmstellung oder bei der Einnahme der Klemmstellung bezüglich des mindestens einen Anschlags oder der mindestens einen Anschlagfläche verstellt.

Vorteilhaft weist mindestens ein Klemmteil eine kugelkalottenartige Klemmfläche auf. Die Klemmfläche kann beispielsweise als eine ringförmige Klemmfläche ausgestaltet sein. Die Klemmfläche erstreckt sich beispielsweise um eine Vertiefung, in die der Kuppelkörper eintaucht. In der Vertiefung selbst hat der Kuppelkörper vorteilhaft keine Abstützung. Somit ist also beispielsweise ein Scheitelpunkt des Kuppelkörpers oder der Kupplungskugel nicht abgestützt, wohl aber eine sich um den Scheitelpunkt des Kuppelkörpers herum erstreckende ringförmige Kugelmantel-Fläche.

Eine zweckmäßige Ausgestaltung der Erfindung sieht vor, dass eine Klemmfläche des durch den Kuppelkörper ausrichtbaren Klemmteils zwischen der Lageranordnung und der mindestens einen Anschlagfläche angeordnet ist. Beispielsweise ist diese mindestens eine Anschlagfläche eine verstellbare Anschlagfläche oder an einem der bereits erwähnten Anschlagelemente angeordnet, welches relativ zum Beispiel zu dem Kraftübertragungselement der Betätigungseinrichtung oder der Basis der Lastenträgerkupplung verstellbar ist.

Vorteilhaft ist es, wenn an einander entgegengesetzten Seiten des durch den Kuppelkörper ausrichtbaren Klemmteils einerseits die mindestens eine Anschlagfläche, insbesondere ein Anschlagelement oder Stellelement, und die Lageranordnung angeordnet sind.

Im Sinne einer einfachen Montage ist es, wenn die Basis der Lastenträgerkupplung ein Basisgehäuse umfasst, welches anhand von Stanz-Biegeteilen oder Stanzteilen gebildet ist.

Das mindestens eine bezüglich der mindestens einen Anschlagfläche verstellbare Klemmteil ist zweckmäßigerweise anhand der Lageranordnung schwimmend an der Basis oder der Betätigungseinrichtung gelagert. Durch diese schwimmende Lagerung sind verschiedene Bewegungsfreiheitsgrade möglich, beispielsweise entlang zweier oder dreier Bewegungsachsen.

Das mindestens eine, durch den Kuppelkörper ausrichtbare Klemmteil ist zweckmäßigerweise an einander entgegengesetzten Seiten seiner Klemmfläche bezüglich der Basis der Lastenträgerkupplung gelagert. Beispielweise ist an einer Seite ein Schwenklager vorgesehen, während an der anderen Seite ein Schiebelager vorgesehen ist, das mit relativ großzügigem Spiel ausgestattet ist.

Vorteilhaft ist weiterhin, wenn das durch den Kuppelkörper ausrichtbare Klemmteil durch die Lageranordnung beweglich gelagert ist, beispielsweise an der Basis oder der Betätigungseinrichtung, abseits der Lageranordnung zu dem in Eingriff mit der Basis oder der Betätigungseinrichtung ist, sodass es bezüglich der Basis oder der Betätigungseinrichtung unverlierbar ist. Beispielsweise greift ein Haltevorsprung oder eine Nase in eine entsprechende Ausnehmung an der Basis oder der Betätigungseinrichtung ein. Somit kann beispielsweise das Klemmteil um eine Schwenkachse schwenken, wobei es jedoch radial entfernt zu der Schwenkachse durch die vorgenannte Verliersicherung unverlierbar an der Basis oder der Betätigungseinrichtung gehalten ist.

Nachfolgend werden Ausführungsbeispiele der Erfindung anhand der Zeichnung erläutert. Es zeigen:

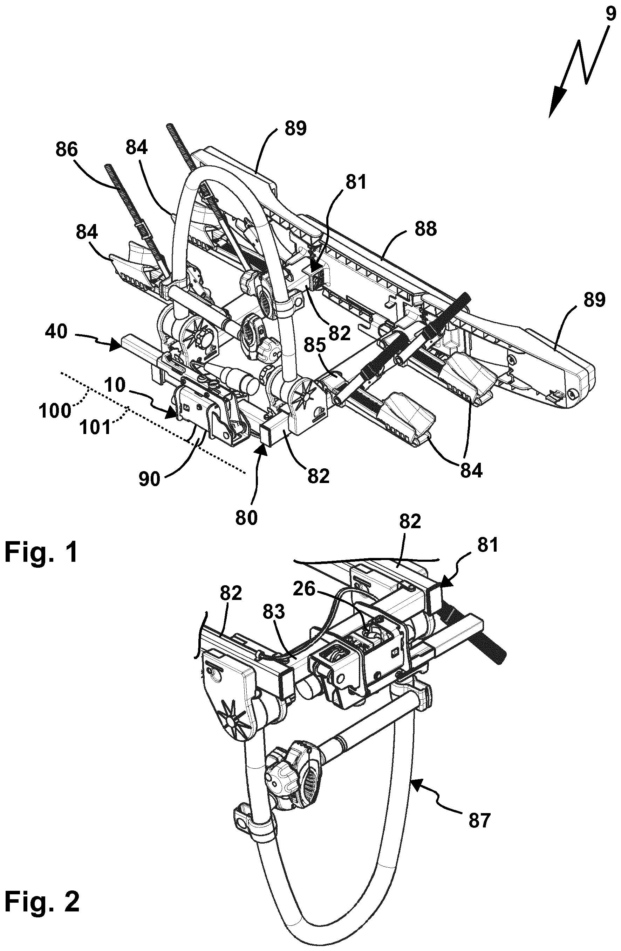

- Figur 1: eine perspektivische Schrägansicht von oben auf einen Hecklastenträger mit einer Lastenträgerkupplung,
- Figur 2: den Hecklastenträger gemäß Figur 1 von schräg unten,
- Figur 3: eine perspektivische seitliche Schrägansicht auf die Lastenträgerkupplung des Hecklastenträgers in ihrer Offenstellung,
- Figur 4: die Lastenträgerkupplung gemäß Figur 3 in Klemmstellung,
- Figur 5: die Lastenträgerkupplung in Offenstellung in perspektivischer seitlicher Schrägansicht von einer zur Ansicht gemäß Figur 3 entgegengesetzten Seite her,
- Figur 6: die Lastenträgerkupplung gemäß Figur 5, jedoch in Klemmstellung,
- Figur 7: einen Querschnitt durch die Lastenträgerkupplung gemäß vorstehender Figuren sowie eine Anhängekupplung, an der die Lastenträgerkupplung zu befestigen ist, etwa entlang einer Schnittlinie E-E in Figur 10,
- Figur 8: einen Querschnitt durch die Klemmstellung befindliche Lastenträgerkupplung sowie die Anhängekupplung entlang einer Schnittlinie F-F in Figur 10,
- Figur 9: eine perspektivische Schrägansicht der Lastenträgerkupplung etwa entsprechend Figur 5, jedoch mit entferntem Basisgehäuse,
- Figur 10: eine Ansicht frontal von oben auf die Lastenträgerkupplung gemäß vorstehender Figuren und
- Figur 11: eine frontale Seitenansicht der Lastenträgerkupplung von derselben Seite wie in Figur 6.

Ein Hecklastenträger 9 ist zur Anordnung an einem Heck 101 eines schematisch dargestellten Kraftfahrzeugs 100 vorgesehen. Dazu hat der Hecklastenträger 9 eine Lastenträgerkupplung 10, welche an einer Anhängekupplung 90 des Kraftfahrzeugs 100 befestigbar ist. Die Anhängekupplung 90 hat beispielsweise einen Kupplungsarm 91, der nach hinten vor das Heck 101 des Kraftfahrzeugs 100 vorsteht, beispielsweise vor einen Stoßfänger des Kraftfahrzeugs 100.

Eine Tragbasis 80 des Hecklastenträgers 9 dient zum Tragen einer Last, beispielsweise von Gepäck oder im konkreten Ausführungsbeispiel von Fahrrädern. Die Tragbasis 80 umfasst beispielsweise ein Tragegestell 81, welches an der Lastenträgerkupplung 10 befestigt ist. Das Tragegestell 81 hat Längsträger 82, die in Fahrzeuglängsrichtung im am Kraftfahrzeug 100 montierten Zustand des Hecklastenträgers 9 verlaufen. Die Längsträger 82 sind durch einen Querträger 83 miteinander verbunden, der seinerseits wiederum an der Lastenträgerkupplung 10 befestigt ist.

An den Längsträgern 82 sind Tragteile 84, beispielsweise Rinnen, angeordnet, auf denen eine Last, insbesondere Fahrräder, abgestellt werden können. Beispielsweise können die Tragteile 84 zwischen einer in der Zeichnung dargestellten Gebrauchsstellung, in der sie seitlich von den Längsträgern 82 abstehen, in eine Nichtgebrauchsstellung anhand von Schwenklagern 85 verstellt werden, in der die Tragteile 84 in einem Zwischenraum zwischen den Längsträgern 82 angeordnet sind. Dann braucht der Hecklastenträger 9 weniger Platz. An den Tragteilen 84 sind weiterhin Befestigungsorgane 86, beispielweise biegeflexible Befestigungsorgane, insbesondere Riemen, zur Befestigung eines Fahrrads, insbesondere dessen Räder, vorgesehen. Weiterhin kann die Last, insbesondere ein jeweiliges Fahrrad, anhand einer Stütze 87 gesichert werden. Die Stütze 87 umfasst beispielsweise einen Bügel, der winkelig von dem Tragegestell 81 in der Gebrauchsstellung absteht (in der Zeichnung so dargestellt), vorteilhaft aber auch noch in Richtung des Tragegestells 81, insbesondere der Längsträger 82, bei Nichtgebrauch verstellbar ist an der Stütze 87 sind beispielsweise verstellbare Tragarme (nicht näher bezeichnet) zum Halten einer Last, insbesondere eines Fahrrads, vorgesehen.

Zwischen den Längsträgern 82 erstreckt sich dem Querträger 83 gegenüberliegend weiterhin ein Kennzeichenträger 88, der die Längsträger 82 verbindet. An dem Kennzeichenträger 88 sind Leuchten 89 zur Bereitstellung einer Heckbeleuchtung des Hecklastenträgers 9 angeordnet. Die Leuchten 89 können vorteilhaft anhand von nicht näher bezeichneten Schwenklagern vorteilhaft zwischen einer etwa mit dem Kennzeichenträger 88 fluchtenden Gebrauchsstellung und einer zu den Längsträgern 82 hin verstellten Nichtgebrauchsstellung verschwenkt werden.

Die nachfolgend näher erläuterte Lastenträgerkupplung 10 eignet sich vorteilhaft zur Befestigung der Tragbasis 80 am Kraftfahrzeug 100. Die Lastenträgerkupplung 10 könnte aber auch ohne weiteres eine andere Tragbasis, zum Beispiel eine Tragplattform, auf die nachfolgend erläuterte Weise sicher an der Anhängekupplung 90 halten.

Die Lastenträgerkupplung 10 umfasst eine Basis 11, die mit der Tragbasis 80 verbunden ist. Selbstverständlich könnte die Basis 11 auch integral mit einer Tragbasis eines Hecklastenträgers sein oder als eine Tragbasis ausgestaltet sein.

Das Basisgehäuse 12 ist vorteilhaft im Wesentlichen blockförmig.

Das Basisgehäuse 12 hat zum Beispiel eine obere Seitenwand 13 und eine dieser gegenüberliegende untere Seitenwand 14 (jeweils in Bezug auf die Gebrauchslage im am Kraftfahrzeug 100 montierten Zustand der Lastenträgerkupplung 10), zwischen denen sich Seitenwände 15 und 16 erstrecken. An einander entgegengesetzten Stirnseiten der Seitenwände 13-16 sind Stützwände 17 und 18 vorgesehen, an denen jeweils Haltevorsprünge 19 für das Tragegestell 81 vorhanden sind. Beispielsweise ist der Querträger 83 durch Halteaufnahmen 20 an den Haltevorsprüngen 19 durchgesteckt.

Vor die Stützwand 18 steht ein Lagervorsprung 21 vor, der vorzugsweise integral durch die Seitenwände 14-16 gebildet ist. Beispielsweise sind diese Seitenwände 14-16 durch entsprechende Durchstecköffnungen an der Stützwand 18 durchgesteckt, was eine besonders stabile Konstruktion darstellt.

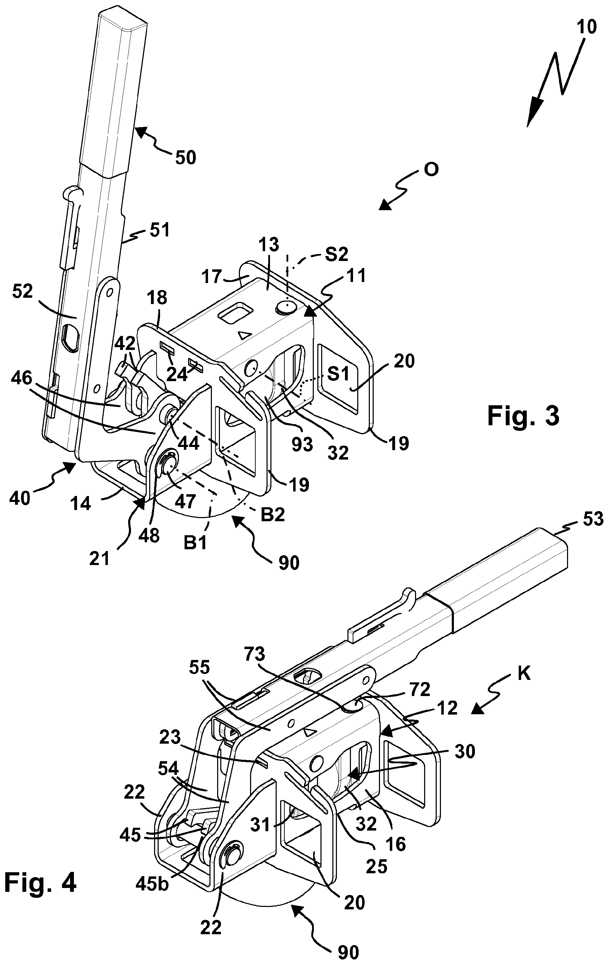

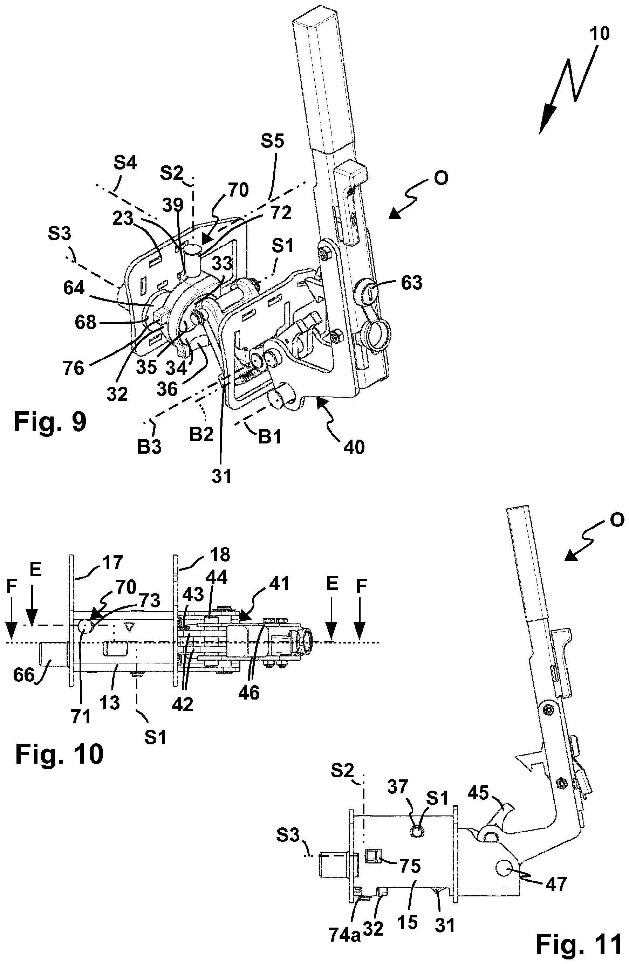

Diese Stecktechnologie ist auch zwischen den Seitenwänden 13-16 und den Stützwänden 17 und 18 an anderer Stelle realisiert. Beispielsweise haben die Seitenwände 13-16, insbesondere die Seitenwand 13, Steckvorsprünge 24, die in korrespondierende Steckaufnahmen 23 der Stützwände 17, 18 eingesteckt sind, siehe dazu beispielsweise Figur 3 und Figur 9. Die Steckvorsprünge 24 sind integral mit den Seitenwänden 13-16. Die Steckvorsprünge 24 stehen vorteilhaft vor deren Schmalseiten in Richtung der Stützwände 17, 18 in der Art von Stecknasen vor.

Die Basis 11 begrenzt anhand der Seitenwände 13-16 sowie der Stützwände 17 und 18 eine Aufnahme 25, also einen Innenraum, in der beispielsweise die nachfolgend näher erläuterte Klemmeinrichtung 30 angeordnet ist.

Ein Kuppelkörper 93 der Anhängekupplung 90 kann beispielsweise durch eine Durchtrittsöffnung 26 an der Seitenwand 14 des Basisgehäuses 12 durchgesteckt werden, um im Innenraum des Basisgehäuses 12 durch die Klemmeinrichtung 30 geklemmt zu werden.

Der Kuppelkörper 93 ist beispielsweise an einem Kupplungsarm 91 angeordnet, der nach hinten vor das Heck 101 des Kraftfahrzeugs 100 vorsteht. Am freien Endbereich des Kupplungsarms 91 ist ein Halsabschnitt 92 vorgesehen, an welchem der Kuppelkörper 93, beispielsweise eine Kupplungskugel, angeordnet ist.

Die Klemmeinrichtung 30 ist durch eine Betätigungseinrichtung 40 zwischen einer Offenstellung O und einer Klemmstellung K verstellbar. In der Offenstellung O sind Klemmteile 31, 32 der Klemmeinrichtung 30 weiter voneinander entfernt als in der Klemmstellung K, so dass der Kuppelkörper 93, insbesondere die Kupplungskugel, in einen Zwischenraum zwischen den Klemmteilen 31 und 32 einführbar oder aus diesem Zwischenraum wieder entnehmbar ist. In der Klemmstellung K hingegen sind die Klemmteile 31, 32 zueinander hin verstellt, sodass sie den Kuppelkörper 93 fest klemmen. Dann ist der Hecklastenträger 9 fest mit der Anhängekupplung 90 und somit dem Kraftfahrzeug 100 verbunden, sodass vorteilhaft auch schwerere Lasten, insbesondere auch Elektrofahrräder oder dergleichen, sicher transportierbar sind.

Die Klemmteile 31, 32 weisen jeweils eine Formschlussaufnahme 33 zum formschlüssigen Aufnehmen des Kuppelkörpers 93 auf. Die Formschlussaufnahmen 33 sind zumindest partiell kugelkalottenförmig, um den kugeligen Kuppelkörper 93 formschlüssig und flächig halten zu können. Die Formschlussaufnahmen 33 weisen beispielsweise kugelkalottenförmige Klemmbereiche 34 auf, die sich um Vertiefungen 35 herum erstrecken. Der Kuppelkörper 93 taucht in die Vertiefungen 35 ein, hat jedoch dort keinen Kontakt mit den Klemmteilen 31, 32. Der Kontakt zwischen Kuppelkörper 93 und den Formschlussaufnahmen 33 ist nämlich vorzugsweise nur in den Klemmbereichen 34, die dementsprechend ringförmig sind, vorgesehen.

Dem Halsabschnitt 92 der Anhängekupplung 90 sind Sicherungsabschnitte 36 der Klemmteile 31, 32 zugeordnet, die sich von den Formschlussaufnahmen 33 weg erstrecken. Die Sicherungsabschnitte 36 haben beispielsweise zylindrische Vertiefungen, in die der Halsabschnitt 92 formschlüssig passt. Allerdings sind die Sicherungsabschnitte 36 so ausgestaltet, dass sie dann, wenn die Klemmbereiche 34 mit dem Kuppelkörper 93 verklemmt sind, in der Regel nicht in Kontakt mit dem Halsabschnitt 92 des Kupplungsarms 91 sind. Nur wenn die Verklemmung der Klemmeinrichtung 30 beispielsweise bei übermäßiger Belastung, bei einem Unfall oder dergleichen, und/oder dann, wenn die Lastenträgerkupplung 10 nicht optimal eingestellt ist, insbesondere die Übertotverspannung nicht korrekt eingestellt ist, ganz oder teilweise gelöst ist, ermöglichen die Sicherungsabschnitte 36 einen zusätzlichen formschlüssigen Halt der Lastenträgerkupplung 10 am Kupplungsarm 91.

An dieser Stelle sei bemerkt, dass die Klemmteile 31, 32 vorzugsweise etwa plattenartig sind und/oder Klemmkörper bilden. Bevorzugt sind die Klemmteile 31, 32 als einstückige, entsprechend belastbare Bauteile ausgebildet. Die Klemmteile 31 sind vorzugsweise aus Metall, insbesondere Stahl, Eisen, Aluminium oder dergleichen.

Nun wäre es an sich denkbar, dass beide Klemmteile 31, 32 zur Offenstellung O hin schwenkbar oder in sonstiger Weise beweglich an der Basis 11 gelagert sind, um so den Zwischenraum zum Einführen oder Entnehmen des Kuppelkörpers 93 zwischen den Klemmteilen 31, 32 sozusagen zu öffnen.

Beim Ausführungsbeispiel ist jedoch nur das Klemmteil 31 das sozusagen aktive Klemmteil, welches zwischen der Offenstellung O und der Klemmstellung K anhand der Betätigungseinrichtung 40 betätigbar gelagert ist. Beispielsweise ist ein Achsglied 38 an der Basis 11 aufgenommen, welches eine Schwenkachse S1 definiert, um welches das Klemmteil 31 relativ zur Basis 11 schwenken kann. Vorzugsweise ist die Orientierung der Schwenkachse S1 so, dass sie bei Gebrauch der Lastenträgerkupplung 10 etwa oder genau horizontal und/oder etwa oder genau in Fahrzeuglängsrichtung des Kraftfahrzeugs 100 verläuft. Die Schwenkachse S1 verläuft zweckmäßigerweise zwischen den Seitenwänden 15 und 16. Die Schwenkachse S1 verläuft weiterhin vorteilhaft nahe der oberen Seitenwand 13.

Die Betätigungseinrichtung 40 ist an dem Lagervorsprung 21 der Basis 11 gelagert. Die Betätigungseinrichtung 40 umfasst eine Gelenkanordnung 41 zur Betätigung des Klemmteils 31 zwischen der Klemmstellung K und der Offenstellung O.

Die Gelenkanordnung 41 umfasst beispielsweise Stellglieder 42, die anhand eines Achsglieds 43 mit dem Klemmteil 31 um eine Schwenkachse B3 schwenkbar bewegungsgekoppelt ist. Das Achsglied 43 durchsetzt beispielsweise eine Lageraufnahme 43a am Klemmteil 31. Die Lageraufnahme 43a ist beispielsweise an einem entgegengesetzt zur Formschlussaufnahme 33 vor das Klemmteil 31 vorstehenden Lagervorsprung vorgesehen. Die Stellglieder 42 sind nebeneinander rechtwinkelig quer zum Achsglied 43 und/oder parallel verlaufend angeordnet, sodass sie funktional ein einziges Glied der Gelenkanordnung 41 bilden.

Die Stellglieder 42 sind über ein Achsglied 44 um eine Schwenkachse B2 schwenkbar mit einem Betätigungshebel 50 der Betätigungseinrichtung gekoppelt, welcher seinerseits anhand eines Achsglieds 47 schwenkbar um eine Schwenkachse B1 an der Basis 11 schwenkbar gelagert ist. Das Achsglied 47 ist in Lageraufnahmen an Lagerwandabschnitte 22 des Lagervorsprungs 21 insbesondere schwenkbar aufgenommen. Zum Halten in Längsrichtung der Schwenkachse B1 an der Basis 11 hat das Achsglied 47 einen Kopf 49 am einen Längsende sowie einen Sicherungsring 48 am anderen Längsende. Der Kopf 49 und der Sicherungsring 48 stützen sich an einander abgewandten Außenseiten der Lagerwandabschnitte 22 ab.

Zwischen den Achsgliedern 47, 44 oder zwischen den Schwenkachsen B1 und B2 erstrecken sich Betätigungsglieder 46 des Betätigungselements 50. Die Betätigungsglieder 46 sind ebenso wie die Stellglieder 42 parallel nebeneinander angeordnet und von den Achsgliedern 47, 44 durchdrungen. Funktional bilden die Betätigungsglieder 46 dementsprechend ebenfalls ein einziges Betätigungsglied.

Beispielsweise sind die Stellglieder 42 und die Betätigungsglieder 46 als Blechteile ausgeführt. In diesem Zusammenhang sei auch erwähnt, dass die Wände des Basisgehäuses 12 vorteilhaft als Blechteile ausgestaltet sind.

Die Stellglieder 42 und die Betätigungsglieder 46 bilden vorteilhaft eine Gliederkette.

Die Stellglieder 42 und die Betätigungsglieder 46 verkürzen bei einem Schwenken um die Schwenkachse B2 in eine Winkellage zueinander hin den Abstand zwischen den Schwenkachsen B1 und B3, wobei das Klemmteil 31 vom Klemmteil 32 weggeschwenkt und die Offenstellung O erreicht wird. Die Schwenkachse B2 schwenkt dabei weit von einer sich zwischen den Schwenkachsen B1 und B3 erstreckenden Achse V1 weg. Die bereits erwähnte Gliederkette der Stellglieder 42 und Betätigungsglieder 46 nimmt eine Knickstellung ein.

In Richtung der Klemmstellung K hingegen schwenken die Stellglieder 42 und Betätigungsglieder 46 in eine im Wesentlichen miteinander fluchtende Lage.

Wenn sich die Schwenkachse B2 genau entlang der Achslinie zwischen den Schwenkachsen B1 und B3 befindet, nimmt sie eine Totpunktlage ein. Die Schwenkachse B2 befindet sich zur Einnahme einer Übertotpunktlage in der Klemmstellung K an der einen Seite einer Verbindungsachse zwischen den Schwenkachsen B1 und B3 und in der Offenstellung O an der anderen Seite einer derartigen Verbindungsachse zwischen den Schwenkachsen B1 und B3.

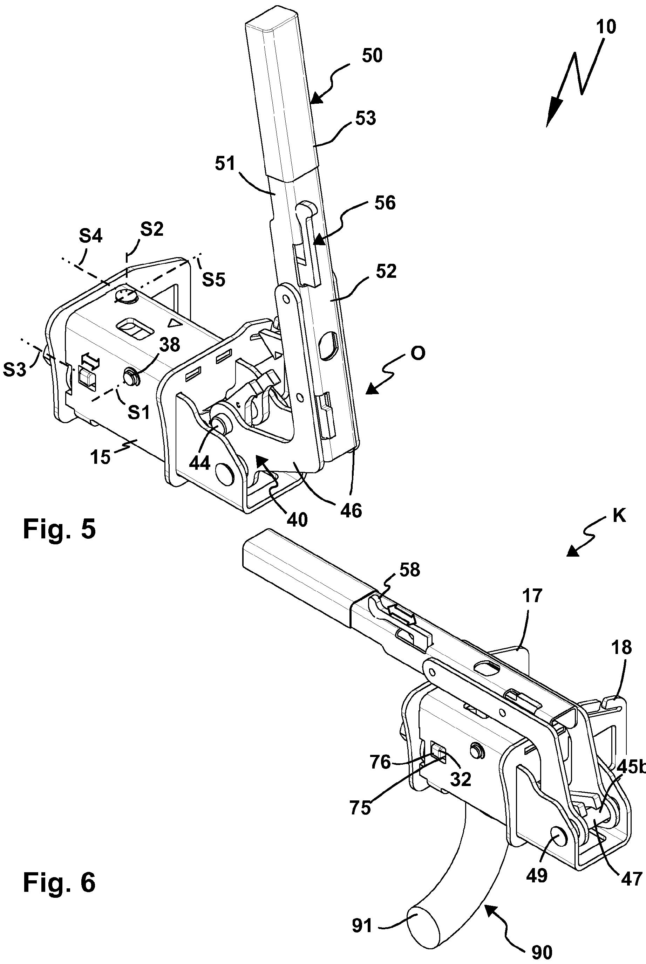

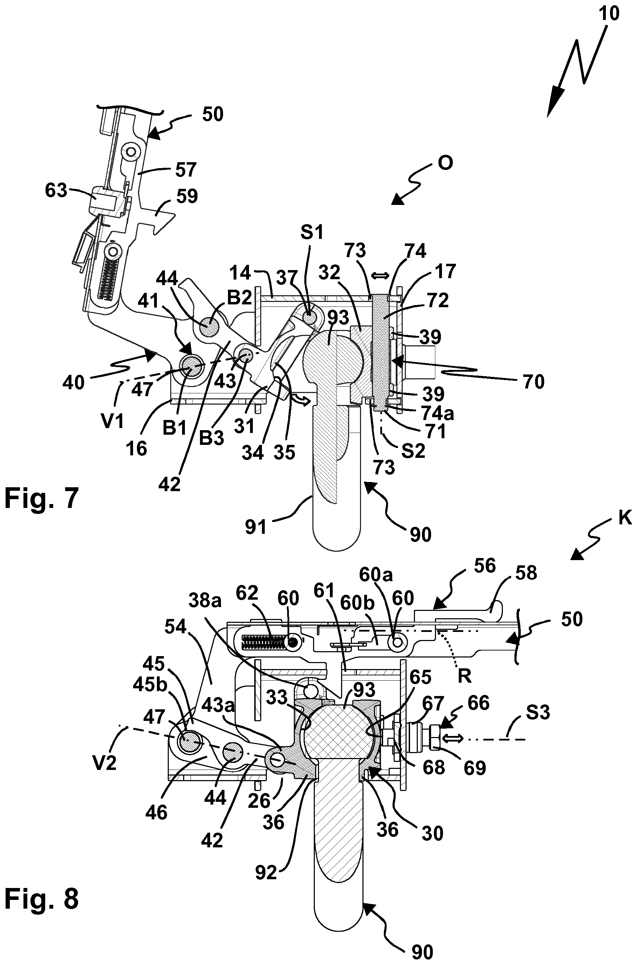

Die Schwenkachse B2 befindet sich in der Klemmstellung K knapp jenseits einer sich zwischen den Schwenkachsen B1 und B3 in der Klemmstellung K erstreckenden Achse V2 in einer Übertotpunktlage. Diese Übertotpunktlage wird durch einen Übertotpunkt-Anschlag 45b definiert, an dem Anschlagarme 45 der Stellglieder 42 in der Übertotpunktlage oder der Klemmstellung K anschlagen, siehe dazu beispielsweise Figur 4, Figur 6 und Figur 8. Die Anschlagarme 45 stehen in axialer Verlängerung eines sich zwischen den Schwenkachsen B2 und B3 erstreckenden Abschnitts der Stellglieder 42 ab.

Von den Betätigungsgliedern 46 stehen Arme 54 winkelig, etwa in einem Winkel von 90°, insbesondere 80-110°, ab. Von den Armen 54 wiederum stehen Verbindungsschenkel 55 winkelig ab, beispielsweise etwa in einem Winkel von etwa 90°. Insgesamt ist die Konfiguration und Winkellage so getroffen, dass die Arme 54 und die Verbindungsschenkel 55 in der Klemmstellung K etwa parallel zur Stützwand 18 und zur oberen Seitenwand 13 laufen.

Zwischen den Verbindungsschenkeln 55 ist ein Betätigungsarm 51 des Betätigungshebels 50 aufgenommen. Der Betätigungsarm 51 weist einen Handgriff 53 zum Ergreifen durch einen Bediener auf sowie einen Betätigungsabschnitt 52 auf, der zwischen den Verbindungsschenkeln 55 gehalten ist. Beispielsweise sind die Verbindungsschenkel 55 mit dem Betätigungsabschnitt 52 verschraubt, verklebt, vernietet oder dergleichen. Jedenfalls bildet der Betätigungsarm 51 zusammen mit den Betätigungsgliedern 46 den Betätigungshebel 50, mit welchem die Stellglieder 42 betätigbar sind.

Die Betätigungseinrichtung 40 ist anhand einer Verriegelungseinrichtung 56 in der Klemmstellung K verriegelbar. Die Verriegelungseinrichtung 56 umfasst ein entlang einer Achse R an dem Betätigungsarm 51 verschieblich gelagertes Riegelelement 57. Beispielsweise sind 2 Schiebelager 60 vorgesehen. Die Schiebelager 60 umfassen beispielsweise Lagervorsprünge 60a, die in Lageraufnahmen 60b am Riegelelement 57 eingreifen. Das Riegelelement 57 bildet beispielsweise ein an dem Betätigungshebel 50 oder dem Betätigungsarm 51 verschieblich gelagertes Bauteil.

Das Riegelelement 57 weist einen Betätigungsabschnitt 58 auf, welcher an einem Außenumfang des Betätigungshebels 50, insbesondere des Betätigungsarms 51 bequem durch einen Bediener betätigbar ist, um einen vom Riegelelement 57 abstehenden Haken 59 (alternativ könnte auch ein Steckbolzen oder sonstiger Riegelvorsprung vorgesehen sein) außer Eingriff mit einer Hakenaufnahme 61 der Basis 11 bringen. In die Eingriffstellung bzw. Verriegelungsstellung des Hakens 59 in der Hakenaufnahme 61 hingegen wirkt eine Feder 62, die vorzugsweise an einem der Schiebelager 60 angeordnet ist. Der Bediener betätigt also das Riegelelement 57 entgegen der Kraft der Feder 62 in die Entriegelungsstellung, bei der der Haken 59 aus der Hakenaufnahme 61 herausbewegt ist, sodass der Bediener den Handbetätigungshebel 50 um die Schwenkachse B1 schwenken und somit die Klemmeinrichtung 30 in Richtung der Offenstellung O betätigen kann.

In der Verriegelungsstellung ist das Riegelelement 57 vorzugsweise durch ein Schloss 63 verschließbar. Das Schloss 63 wirkt beispielsweise einer Schiebebewegung des Riegelelements 57 in die Entriegelungsstellung entgegen oder blockiert diese Schiebebewegung entlang der Achse R.

Das Klemmteil 32 ist an der Basis 11 mit Bewegungsspiel mit mehreren Bewegungsfreiheitsgraden gelagert. Allerdings ist für das Klemmteil 32 eine Anschlagfläche 65 vorgesehen, an welcher das Klemmteil 32 in der Klemmstellung K anliegt. Das Klemmteil 32 stützt sich an der Anschlagfläche 65 beispielsweise mit seiner zu der Formschlussaufnahme 33 entgegengesetzten Rückseite ab.

Die Anschlagfläche 65 ist vorzugsweise eine bezüglich der Basis 11 verstellbare Anschlagfläche, wobei eine ortsfeste oder von der Basis 11 direkt bereitgestellte Anschlagfläche ebenfalls denkbar ist.

Die Anschlagfläche 65 ist an einem Anschlagelement 66 vorgesehen, beispielsweise einer Schraube, welche in ein an der Basis 11 angeordnetes, insbesondere der Stützwand 17 vorgesehenes, Gewinde 67 einschraubbar ist. Im Bereich des Anschlagelements 66 ist zweckmäßigerweise eine Verstärkung 68 an der Stützwand 17 vorgesehen. Die Verstärkung 68 könnte beispielsweise durch ein Gewindeeinsatzteil 64 bereitgestellt werden, welcher das Gewinde 67 aufweist.

Am vorderen, freien Endbereich der Schraube, die das Anschlagelement 66 bildet, könnte eine Stützplatte angeordnet sein, die die Anschlagfläche 65 bereitstellt.

Die Schraube oder das Anschlagelement 66 kann beispielsweise an einem Kopf 69 betätigt werden, um das Anschlagelement in das Gewinde 61 einzuschrauben oder auszuschrauben und so die Position der Anschlagfläche 65 entlang einer Stellachse S3 zu verstellen.

Das Klemmteil 32 ist an der Basis 11 anhand einer Lageranordnung 70 beweglich gelagert. Die Lageranordnung 70 umfasst ein Schwenklager 71 mit einem Lagerbolzen 72, der in Lageraufnahmen 73 der Basis 11 aufgenommen ist. Der Lagerbolzen 72 ist in Lageraufnahmen 39 des Klemmteils 32 aufgenommen, beispielsweise drehfest. Bevorzugt oder möglich ist es jedoch, wenn das Klemmteil 32 relativ zum Lagerbolzen 72 um dessen Längsachse schwenkbar und/oder entlang dessen Längsachse verschieblich gelagert ist. Dadurch ist mindestens ein Bewegungsfreiheitsgrad, sind vorzugsweise mindestens zwei Bewegungsfreiheitsgrade realisierbar.

Die Lageraufnahmen 73 sind an der oberen und unteren Seitenwand 13, 14 vorgesehen. Ein Kopf 74 sowie ein Sicherungsring 74a sind an einander entgegengesetzten Längsenden des Lagerbolzens 72 vorgesehen und stützen sich an den Seitenwänden 13, 14 außenseitig ab. Dadurch ist der Lagerbolzen 72 unverlierbar an der Basis 11 gehalten.

Anhand des Lagerbolzens 72 ist das Klemmteil 32 um eine Schwenkachse S2 schwenkbar bezüglich der Basis 11 gelagert. Dabei kann sich der Lagerbolzen 72 beispielsweise in den Lageraufnahmen 73 drehen. Auf diesem Wege ist ein Bewegungsfreiheitsgrad, nämlich ein Rotationsfreiheitsgrad, realisiert.

Zudem ist der Lagerbolzen 72 innerhalb der Lageraufnahmen 73 um zueinander winkelige Achsen S4 und S5 verschieblich gelagert. Beispielsweise hat der Lagerbolzen 72 ein relativ großes Bewegungsspiel entlang der Achse S4, weil die Lageraufnahmen 73 als Langlöcher ausgestaltet sind. Aber auch quer zu dieser Achse S4, nämlich in Richtung der Achse S5, hat der Lagerbolzen 72 ein Bewegungsspiel in den Lageraufnahmen 73. Weiterhin ist es möglich, dass zwischen dem Kopf 74 und dem Sicherungsring 74a ein größerer Abstand als eine Höhe des Basisgehäuses 12 vorhanden ist, so dass der Lagerbolzen 72 ferner noch entlang der Achse S2 verschieblich ist. In diesem Fall sind dann insgesamt drei Translationsfreiheitsgrade entlang der Achsen S2, S4 und S5 vorhanden, die jeweils rechtwinkelig zueinander sind.

Die Lageranordnung 70 und die Anschlagfläche 65 sind an einander entgegengesetzten Seiten des Klemmbereichs 34 des Klemmteils 32 angeordnet. Mithin erstreckt sich also der Klemmbereich 34 zwischen der Lageranordnung 70 und der Anschlagfläche 65. Wenn der Kuppelkörper 93 zwischen die Klemmteile 31, 32 geklemmt wird, stützt er sich am Klemmteil 31 ab, welches durch die Betätigungseinrichtung 40 in Richtung des Klemmteils 32 verstellt wird. Dabei nimmt der Kuppelkörper 93 einerseits eine optimale Position in der Formschlussaufnahme 33 des Klemmteils 31 ein, andererseits richtet er das Klemmteil 32 sich am Klemmteil 31 abstützend optimal aus, so dass er auch in der Formschlussaufnahme 33 des Klemmteils 32 optimal flächig zu liegen kommt. Das Klemmteil 32 kann nämlich anhand des durch die Lageranordnung 70 ermöglichten Bewegungsspiels mit mehreren Bewegungsfreiheitsgraden, beispielsweise translatorisch entlang und rotatorisch um die Schwenkachse S2 und/oder entlang mindestens einer der Stellachsen S4 und/oder S5, während des letzten Bewegungsabschnitts in Richtung der Klemmstellung K bezüglich der Anschlagfläche 65 verstellt werden, ist also schwimmend oder beweglich in oder an der Basis 11 gehalten. Dadurch ist ein optimaler Klemmsitz des Kuppelkörpers 93 zwischen den Klemmteilen 31, 32 realisierbar.

Allerdings kann und soll sich das Klemmteil 32 nur begrenzt innerhalb oder an der Basis 11 bewegen können, sodass es nicht in eine ein Einführen des Kuppelkörpers 93 erschwerende oder behindernde oder unmöglich machende Stellung zu dem anderen Klemmteil 31 hin verstellbar ist. Dazu ist in radialem Abstand zu der Schwenkachse S2 eine Aufnahme 75 vorgesehen, in die ein Vorsprung 76 des Klemmteils 32 eingreift. Die Aufnahme 75 ist beispielsweise an der Seitenwand 15 des Basisgehäuses 12 vorgesehen. In der Aufnahme 75 hat jedoch das Klemmteil 32 bzw. dessen Vorsprung 76 ein ausreichendes Bewegungsspiel um beispielsweise eine Verstellung des Klemmteils 32 entlang der Stellachse S3 zu ermöglichen. Auch quer zur Stellachse S3, nämlich parallel zur Stellachse S2, greift der Vorsprung 76 mit Spiel in die Aufnahme 75 ein, sodass das Klemmteil 32 auch in Bezug auf die Stellachse S2 ein Bewegungsspiel bzw. den bereits erwähnten Bewegungsfreiheitsgrad aufweist.

Die Lageraufnahmen 73 und/oder die Aufnahme 75 bilden in der Klemmstellung K vorzugsweise weitere Anschlagflächen für das Klemmteil 32. Durch den Kuppelkörper 93 wird nämlich das Klemmteil 32 einerseits gegen die Anschlagfläche 65 verstellt, andererseits auch in Bezug auf die Lageraufnahme 73 in eine Offenstellung oder Anschlagstellung gebracht.

Die Anschlagfläche 65 ist nicht nur beim Ausführungsbeispiel, sondern kann auch bei anderen Ausführungsformen der Erfindung, eine relativ großflächige Planfläche sein. Die Anschlagfläche 65 kann in einer Ausgestaltung der Erfindung einer Kipp- oder Schwenkbewegung des Klemmteils 32 um die Schwenkachse S2 im Sinne einer Behinderung dieser Schwenkbewegung entgegenwirken. Dennoch ist es möglich, dass das Klemmteil 32 um die Schwenkachse S2 schwenkt. Dies kann vorteilhaft dazu beitragen, dass das Klemmteil 32 sich sozusagen bezüglich der Basis 11 verkeilt oder verklemmt, wenn es durch den Kuppelkörper 93 mit Kraft beaufschlagt wird.

Ein in der Zeichnung nicht näher dargestelltes Ausführungsbeispiel der Erfindung kann vorsehen, dass das Achsglied 43 mit mindestens zwei Bewegungsfreiheitsgraden, beispielsweise einem Translationsfreiheitsgrad und einem Rotationsfreiheitsgrad, um die Achse B3 an dem Stellglied 42 angelenkt ist, so dass das Klemmteil 31 auf dem letzten Stück des Bewegungswegs in Richtung der Klemmstellung K durch den Kuppelkörper 93 relativ zum anderen Klemmteil 31 und/oder relativ zu der Lageraufnahme, die vom Achsglied 43 durchsetzt ist und somit eine Anschlagfläche darstellt, ausrichtbar ist.

## Patentansprüche

1. Lastenträgerkupplung zur lösbaren Festlegung eines eine Tragbasis (80) zum Auflegen einer Last aufweisenden Hecklastenträgers (9) an einem insbesondere als Kupplungskugel ausgestalteten Kuppelkörper (93) einer Kraftfahrzeug-Anhängekupplung (90), wobei die Lastenträgerkupplung (10) eine Basis (11) aufweist, die die Tragbasis (80) bildet oder zum Halten der Tragbasis (80) vorgesehen ist, wobei an der Basis (11) eine zwei Klemmteile (31, 32) umfassende Klemmeinrichtung (30) angeordnet ist, die zwischen einer zum Einführen des Kuppelkörpers (93) in einen Zwischenraum zwischen den Klemmteilen (31, 32) und zum Entfernen des Kuppelkörpers (93) aus dem Zwischenraum vorgesehenen Offenstellung (O) und einer zum Klemmen des Kuppelkörpers (93) vorgesehenen Klemmstellung (K) durch eine Betätigungseinrichtung (40) verstellbar ist, wobei die Klemmteile (31, 32) in der Offenstellung (O) zum Einführen und Entfernen des Kuppelkörpers (93) einen größeren Abstand zueinander haben als in der Klemmstellung (K), **dadurch gekennzeichnet, dass** mindestens eines der Klemmteile (32) anhand einer Lageranordnung (70) mit mindestens zwei voneinander verschiedenen Bewegungsfreiheitsgraden (S2, S3, S4) bezüglich mindestens einer Anschlagfläche (65) beweglich gelagert ist, so dass es durch den sich am anderen Klemmteil (31) abstützenden Kuppelkörper (93) zu einer Ausrichtung an dem Kuppelkörper (93) während eines letzten Bewegungsabschnitts der Klemmeinrichtung (30) zur Einnahme der Klemmstellung (K) bezüglich der mindestens einen Anschlagfläche (65) verstellbar ist, wobei die mindestens eine Anschlagfläche (65) eine an einem zur Einstellung eines Abstands zwischen den Klemmteilen (31, 32) in der Klemmstellung (K) verstellbaren Anschlagelement (66) angeordnete Anschlagfläche (65) umfasst oder dadurch gebildet ist und/oder eine bezüglich eines Bauteils der Betätigungseinrichtung (40), insbesondere eines Kraftübertragungselements, oder der Basis (11) ortsfeste Anschlagfläche (65) umfasst oder dadurch gebildet ist.

2. Lastenträgerkupplung nach Anspruch 1, **dadurch gekennzeichnet, dass** die mindestens eine Anschlagfläche (65) und die Lageranordnung (70) an der Basis (11) der Lastenträgerkupplung (10) und/oder der Betätigungseinrichtung (40), insbesondere einem Kraftübertragungselement der Betätigungseinrichtung (40), angeordnet sind.

3. Lastenträgerkupplung nach Anspruch 1 oder 2, **dadurch gekennzeichnet, dass** die Lageranordnung (70) und die mindestens eine Anschlagfläche (65) sowie das anhand der Lageranordnung (70) gelagerte Klemmteil (32) an der Basis (11) angeordnet sind und das andere Klemmteil (31) durch die Betätigungseinrichtung (40) zwischen der Klemmstellung (K) und der Offenstellung (O) verstellbar ist.

4. Lastenträgerkupplung nach einem der vorhergehenden Ansprüche, **dadurch gekennzeichnet, dass** die mindestens zwei Bewegungsfreiheitsgrade (S2, S3, S4) mindestens zwei zueinander winkelige, insbesondere rechtwinkelige, Translationsfreiheitsgrade und/oder mindestens einen Translationsfreiheitsgrad und mindestens einen Rotationsfreiheitsgrad und/oder mindestens zwei Rotationsfreiheitsgrade umfassen.

5. Lastenträgerkupplung nach einem der vorhergehenden Ansprüche, **dadurch gekennzeichnet, dass** das sich an der mindestens einen Anschlagfläche (65) abstützende Klemmteil (32) anhand der Lageranordnung (70) um eine Schwenkachse schwenkbar und eine Schiebeachse verschieblich gelagert ist.

6. Lastenträgerkupplung nach einem der vorhergehenden Ansprüche, **dadurch gekennzeichnet, dass** die Lageranordnung (70) ein Schwenkschiebelager umfasst, anhand dessen das mindestens eine Klemmteil (31, 32) um eine durch ein Schwenkachsteil verlaufende Schwenkachse schwenkbar ist und das Schwenkachsteil entlang einer Schiebeachse verschieblich in einer Lageraufnahme (73) aufgenommen ist.

7. Lastenträgerkupplung nach einem der vorhergehenden Ansprüche, **dadurch gekennzeichnet, dass** die mindestens eine Anschlagfläche (65) eine an einer Lageraufnahme (73), insbesondere einem Langloch, der Lageranordnung (70) angeordnete Lagerfläche umfasst.

8. Lastenträgerkupplung nach einem der vorhergehenden Ansprüche, **dadurch gekennzeichnet, dass** mindestens eines der Klemmteile (31) durch die Betätigungseinrichtung (40) betätigbar und um eine Schwenkachse schwenkbar zwischen der Offenstellung (O) und der Klemmstellung (K) der Klemmeinrichtung (30) gelagert ist.

9. Lastenträgerkupplung nach einem der vorhergehenden Ansprüche, **dadurch gekennzeichnet, dass** eine Schwenkachse der Lageranordnung (70), um die das bezüglich der Anschlagfläche (65) verstellbare Klemmteil (32) schwenkbar ist, winkelig, insbesondere etwa rechtwinkelig, zu einer Schwenkachse ist, um die das andere Klemmteil (31) durch die Betätigungseinrichtung (40) zwischen der Offenstellung (O) und der Klemmstellung (K) der Klemmeinrichtung (30) verschwenkbar ist.

10. Lastenträgerkupplung nach einem der vorhergehenden Ansprüche, **dadurch gekennzeichnet, dass** die Betätigungseinrichtung (40) ein Übertotpunkt-Getriebe und/oder eine Gelenkanordnung (41) und/oder eine Betätigungshebel aufweist.

11. Lastenträgerkupplung nach einem der vorhergehenden Ansprüche, **dadurch gekennzeichnet, dass** die Betätigungseinrichtung (40) eine Gelenkanordnung (41) aufweist, welche mindestens ein Klemmteil (31) in der Klemmstellung (K) in einer Übertotpunkt-Lage hält, wobei die Gelenkanordnung (41) mindestens einen Übertotpunkt-Anschlag (45b), insbesondere in Gestalt eines Achselements, aufweist, an dem ein beim Verstellen des Klemmteils (31) aus der Offenstellung (O) in die Klemmstellung (K) beweglicher Anschlagvorsprung eines Gelenkelements der Gelenkanordnung (41) in der Übertotpunkt-Lage anschlägt.

12. Lastenträgerkupplung nach einem der vorhergehenden Ansprüche, **dadurch gekennzeichnet, dass** mindestens ein Klemmteil (31, 32) eine Formschlussaufnahme (33), insbesondere eine kugelkalottenförmige und/oder ringförmige Klemmfläche, zum formschlüssigen Aufnehmen des Kuppelkörpers (93) aufweist.

13. Lastenträgerkupplung nach einem der vorhergehenden Ansprüche, **dadurch gekennzeichnet, dass** eine Klemmfläche des durch den Kuppelkörper (93) ausrichtbaren Klemmteils (32) zwischen der Lageranordnung (70) und der mindestens eine Anschlagfläche (65), insbesondere dem die Anschlagfläche (65) aufweisenden Anschlagelement (66), angeordnet ist und/oder die mindestens eine Anschlagfläche (65) und die Lageranordnung (70) an einander entgegengesetzten Bereichen des Klemmteils (31, 32) angeordnet sind.

14. Lastenträgerkupplung nach einem der vorhergehenden Ansprüche, **dadurch gekennzeichnet, dass** die Basis (11) der Lastenträgerkupplung (10) ein insbesondere anhand von Stanz-Biegeteilen oder Stanzteilen gebildetes Basisgehäuse umfasst und/oder dass das mindestens eine bezüglich der mindestens einen Anschlagfläche (65) verstellbare Klemmteil (32) anhand der Lageranordnung (70) schwimmend an der Basis (11) oder der Betätigungseinrichtung (40) gelagert ist und/oder dass das durch den Kuppelkörper (93) ausrichtbare mindestens eine Klemmteil (32) an einander entgegengesetzten Seiten seiner Klemmfläche bezüglich der Basis (11) gelagert ist und/oder das das durch den Kuppelkörper (93) ausrichtbare Klemmteil (32) durch die Lageranordnung (70) beweglich gelagert ist und abseits der Lageranordnung (70) in Eingriff mit der Basis (11) oder der Betätigungseinrichtung (40) ist, sodass es bezüglich der Basis (11) oder der Betätigungseinrichtung (40) unverlierbar ist oder ein Bewegungsweg des Klemmteils (32) zu dem anderen Klemmteil (31) begrenzt ist und/oder dass sie einen Bestandteil eines Hecklastträgers bildet.

15. Hecklastenträger mit einer Lastenträgerkupplung nach einem der vorhergehenden Ansprüche.

## Claims

1. Load carrier coupling for the releasable fixing of a rear load carrier (9) with a support base (80) for the placing of a load to a coupling body (93), in the form of a coupling ball, of a motor vehicle trailer coupling (90), wherein the load carrier coupling (10) has a base (11) which forms the support base (80) or is provided for holding the support base (80), wherein there is provided on the base (11) a clamping fixture (30) comprising two clamping parts (31, 32) and which is adjustable by means of an actuating device (40) between an open position (O) for inserting the coupling body (93) into a space between the clamping parts (31, 32) and for removing the coupling body (93) from the space, and a clamping position (K) provided for clamping the coupling body (93), wherein the clamping parts (31, 32) in the open position (O) have a greater distance for inserting and removing the coupling body (93) than in the clamping position (K), **characterised in that** at least one of the clamping parts (32) is movably mounted with the aid of a bearing assembly (70) with at least two degrees of freedom of movement (S2, S3, S4) differing from one another relative to at least one stop face (65), so that it is adjustable by the coupling body (93) resting on the other clamping part (31) to alignment on the coupling body (93) during a last movement section of the clamping fixture (30) to adopt the clamping position (K) relative to the stop face or faces (65), wherein the stop face or faces (65) comprise(s) or is or are formed by a stop face (65) provided on a stop element (66) adjustable for setting a distance between the clamping parts (31, 32) in the clamping position (K) and/or comprises or is formed by a stop face (65) which is stationary relative to a component of the actuating device (40), in particular a force transmission element, or the base (11).

2. Load carrier coupling according to claim 1, **characterised in that** the stop face or faces (65) and the bearing assembly (70) are provided on the base (11) of the load carrier coupling (10) and/or the actuating device (40), in particular a force transmission element of the actuating device (40).

3. Load carrier coupling according to claim 1 or 2, **characterised in that** the bearing assembly (70) and the stop face or faces (65), together with the clamping part (32) mounted with the aid of the bearing assembly (70) are provided on the base (11) and the other clamping part (31) is adjustable by the actuating device (40) between the clamping position (K) and the open position (O).

4. Load carrier coupling according to any of the preceding claims, **characterised in that** the two or more degrees of freedom of movement (S2, S3, S4) include at least two degrees of freedom of translation at an angle, in particular at a right-angle, to one another and/or at least one degree of freedom of translation and at least one degree of freedom of rotation and/or at least two degrees of freedom of rotation.

5. Load carrier coupling according to any of the preceding claims, **characterised in that** the clamping part (32) resting on the stop face or faces (65) with the aid of the bearing assembly (70) is or are mounted pivotably around a swivel axis and movably around a shift axis.

6. Load carrier coupling according to any of the preceding claims, **characterised in that** the bearing assembly (70) includes a swivel-shift bearing, with the aid of which the clamping part or parts (31, 32) is or are pivotable around a swivel axis running through a swivel axis part and the swivel axis part is held in a bearing location (73), movable along a shift axis.

7. Load carrier coupling according to any of the preceding claims, **characterised in that** the stop face or faces (65) include a bearing face provided at a bearing location (73), in particular an elongated hole, of the bearing assembly (70).

8. Load carrier coupling according to any of the preceding claims, **characterised in that** at least one of the clamping parts (31) may be actuated by the actuating device (40) and is mounted pivotably around a swivel axis between the open position (O) and the clamping position (K) of the clamping fixture (30).

9. Load carrier coupling according to any of the preceding claims, **characterised in that** a swivel axis of the bearing assembly (70), around which the clamping part (32) is pivotable relative to the stop face (65), is at an angle in particular roughly at a right-angle, to a swivel axis around which the other clamping part (31) is pivotable by the actuating device (40) between the open position (O) and the clamping position (K) of the clamping fixture (30).

10. Load carrier coupling according to any of the preceding claims, **characterised in that** the actuating device (40) has a top dead centre gear and/or a hinge arrangement (41) and/or an operating lever.

11. Load carrier coupling according to any of the preceding claims, **characterised in that** the actuating device (40) has a hinge arrangement (41) which holds at least one clamping part (31) in the clamping position (K) in a top dead centre position, wherein the hinge arrangement (41) has at least one top dead centre stop (45b), in particular in the form of an axle element on which a stop projection of a hinge element of the hinge arrangement (41), movable during adjustment of the clamping part (31) from the open position (O) into the clamping position (K), strikes in the top dead centre position.

12. Load carrier coupling according to any of the preceding claims, **characterised in that** at least one clamping part (31, 32) has a form-fitting location (33), in particular a spherical-cap-shaped and/or annular clamping face, for form-fitting holding of the coupling body (93).

13. Load carrier coupling according to any of the preceding claims, **characterised in that** a clamping face of the clamping part (32) which may be aligned by the coupling body (93) is located between the bearing assembly (70) and the stop face or faces (65), in particular the stop element (66) with the stop face (65), and/or the stop face or faces (65) and the bearing assembly (70) are arranged on opposite areas of the clamping part (31, 32).

14. Load carrier coupling according to any of the preceding claims, **characterised in that** the base (11) of the load carrier coupling (10) comprises a base housing formed in particular with the aid of punched-bent parts or punched parts and/or that the clamping part or parts (32) adjustable relative to the stop face or faces (65) with the aid of the bearing assembly (70) is or are mounted floating on the base (11) and/or that the clamping part or parts (32) which may be aligned by the coupling body (93) is or are mounted on opposite sides of its or their clamping face relative to the base (11) and/or that the clamping part (32) which may be aligned by the coupling body (93) is movably mounted by means of the bearing assembly (70) and aside from the bearing assembly (70) is in engagement with the base (11) or the actuating device (40), so that it is captive relative to the base (11) or the actuating device (40) or a movement path of the clamping part (32) to the other clamping part (31) is defined and/or that it forms part of a rear load carrier.

15. Rear load carrier with a load carrier coupling according to any of the preceding claims.

## Revendications

1. Dispositif d'accouplement de porte-charge pour la fixation amovible d'un porte-charge arrière (9) présentant une base porteuse (80) pour le placement d'une charge à un corps d'attelage (93) configuré en particulier en tant que boule d'attelage d'un attelage de véhicule automobile (90), dans lequel le dispositif d'accouplement de porte-charge (10) présente une base (11) qui forme la base porteuse (80) ou est prévue pour le maintien de la base porteuse (80), dans lequel un dispositif de serrage (30) comprenant deux parties de serrage (31, 32) est agencé au niveau de la base (11), lequel est déplaçable entre une position ouverte (O) prévue pour l'introduction du corps d'attelage (93) dans un espace intermédiaire entre les parties de serrage (31, 32) et pour le retrait du corps d'attelage (93) de l'espace intermédiaire et une position de serrage (K) prévue pour le serrage du corps d'attelage (93) par un dispositif d'actionnement (40), dans lequel les parties de serrage (31, 32) dans la position ouverte (O) pour l'introduction et le retrait du corps d'attelage (93) présentent une distance supérieure entre elles que dans la position de serrage (K), **caractérisé en ce qu'**au moins une des parties de serrage (32) est logée de manière mobile au moyen d'un agencement de palier (70) avec au moins deux degrés de liberté de mouvement (S2, S3, S4) différents l'un de l'autre par rapport au moins à une surface de butée (65) de sorte qu'elle soit déplaçable par le corps d'attelage (93) s'appuyant contre l'autre partie de serrage (31) en vue d'une orientation au niveau du corps d'attelage (93) pendant une dernière partie de déplacement du dispositif de serrage (30) pour l'occupation de la position de serrage (K) par rapport à l'au moins une surface de butée (65), dans lequel l'au moins une surface de butée (65) comporte une surface de butée (65) agencée au niveau d'un élément de butée (66) déplaçable pour le réglage d'une distance entre les parties de serrage (31, 32) dans la position de serrage (K) ou est formée ainsi et/ou comporte une surface de butée (65) fixe par rapport à un composant du dispositif d'actionnement (40), en particulier un élément de transmission de force, ou la base (11) ou est formée ainsi.

2. Dispositif d'accouplement de porte-charge selon la revendication 1, **caractérisé en ce que** l'au moins une surface de butée (65) et l'agencement de palier (70) sont agencés au niveau de la base (11) du dispositif d'accouplement de porte-charge (10) et/ou du dispositif d'actionnement (40), en particulier d'un élément de transmission de force du dispositif d'actionnement (40).

3. Dispositif d'accouplement de porte-charge selon la revendication 1 ou 2, **caractérisé en ce que** l'agencement de palier (70) et l'au moins une surface de butée (65) ainsi que la partie de serrage (32) logée au moyen de l'agencement de palier (70) sont agencés au niveau de la base (11) et l'autre partie de serrage (31) est déplaçable par le dispositif d'actionnement (40) entre la position de serrage (K) et la position ouverte (O).

4. Dispositif d'accouplement de porte-charge selon l'une des revendications précédentes, **caractérisé en ce que** les au moins deux degrés de liberté de mouvement (S2, S3, S4) comportent au moins deux degrés de liberté de translation angulaires l'un à l'autre, en particulier à angle droit, et/ou au moins un degré de liberté de translation et au moins un degré de liberté de rotation et/ou au moins deux degrés de liberté de rotation.

5. Dispositif d'accouplement de porte-charge selon l'une des revendications précédentes, **caractérisé en ce que** la partie de serrage (32) s'appuyant contre l'au moins une surface de butée (65) est logée de manière pivotante au moyen de l'agencement de palier (70) autour d'un axe de pivotement et de manière coulissante autour d'un axe de coulissement.

6. Dispositif d'accouplement de porte-charge selon l'une des revendications précédentes, **caractérisé en ce que** l'agencement de palier (70) comporte un palier coulissant et pivotant, au moyen duquel l'au moins une partie de serrage (31, 32) est pivotante autour d'un axe de pivotement s'étendant par une partie d'axe de pivotement et la partie d'axe de pivotement est reçue le long d'un axe de coulissement de manière coulissante dans un logement de palier (73).

7. Dispositif d'accouplement de porte-charge selon l'une des revendications précédentes, **caractérisé en ce que** l'au moins une surface de butée (65) comporte une surface de palier agencée au niveau d'un logement de palier (73), en particulier un trou oblong, de l'agencement de palier (70).

8. Dispositif d'accouplement de porte-charge selon l'une des revendications précédentes, **caractérisé en ce qu'**au moins une des parties de serrage (31) est actionnable par le dispositif d'actionnement (40) et logée de manière pivotante autour d'un axe de pivotement entre la position ouverte (O) et la position de serrage (K) du dispositif de serrage (30).

9. Dispositif d'accouplement de porte-charge selon l'une des revendications précédentes, **caractérisé en ce qu'**un axe de pivotement de l'agencement de palier (70), autour duquel la partie de serrage (32) réglable par rapport à la surface de butée (65) est pivotante, est angulaire, en particulier à peu près à angle droit, par rapport à un axe de pivotement, autour duquel l'autre partie de serrage (31) est pivotante par le dispositif d'actionnement (40) entre la position ouverte (O) et la position de serrage (K) du dispositif de serrage (30).

10. Dispositif d'accouplement de porte-charge selon l'une des revendications précédentes, **caractérisé en ce que** le dispositif d'actionnement (40) présente un engrenage de dépassement du point mort et/ou un agencement d'articulation (41) et/ou un levier d'actionnement.

11. Dispositif d'accouplement de porte-charge selon l'une des revendications précédentes, **caractérisé en ce que** le dispositif d'actionnement (40) présente un agencement d'articulation (41) qui maintient au moins une partie de serrage (31) dans la position de serrage (K) dans une position de dépassement du point mort, dans lequel l'agencement d'articulation (41) présente au moins une butée de dépassement du point mort (45b), en particulier sous la forme d'un élément d'axe, contre laquelle bute une saillie de butée mobile lors du déplacement de la partie de serrage (31) de la position ouverte (O) dans la position de serrage (K) d'un élément d'articulation de l'agencement d'articulation (41) dans la position de dépassement du point mort.

12. Dispositif d'accouplement de porte-charge selon l'une des revendications précédentes, **caractérisé en ce qu'**au moins une partie de serrage (31, 32) présente un logement à complémentarité de formes (33), en particulier une surface de serrage en forme de calotte sphérique et/ou annulaire, pour la réception à complémentarité de formes du corps d'attelage (93).

13. Dispositif d'accouplement de porte-charge selon l'une des revendications précédentes, **caractérisé en ce qu'**une surface de serrage de la partie de serrage (32) orientable par le corps d'attelage (93) est agencée entre l'agencement de palier (70) et l'au moins une surface de butée (65), en particulier l'élément de butée (65) présentant la surface de butée (65), et/ou l'au moins une surface de butée (65) et l'agencement de palier (70) sont agencés au niveau de zones opposées de la partie de serrage (31, 32).

14. Dispositif d'accouplement de porte-charge selon l'une des revendications précédentes, **caractérisé en ce que** la base (11) du dispositif d'accouplement de porte-charge (10) comporte un boîtier de base formé en particulier au moins de parties pliées estampées ou parties estampées et/ou que l'au moins une partie de serrage (32) déplaçable par rapport à l'au moins une surface de butée (65) est logée au moyen de l'agencement de palier (70) de manière flottante au niveau de la base (11) ou du dispositif d'actionnement (40) et/ou que l'au moins une partie de serrage (32) orientable par le corps d'attelage (93) est logée au niveau de côtés opposés de sa surface de serrage par rapport à la base (11) et/ou que la partie de serrage (32) orientable par le corps d'attelage (93) est logée de manière mobile par l'agencement de palier (70) et à l'écart de l'agencement de palier (70) est en prise avec la base (11) ou le dispositif d'actionnement (40) de sorte qu'elle soit imperdable par rapport à la base (11) ou au dispositif d'actionnement (40) ou une course de déplacement de la partie de serrage (32) soit limitée par rapport à l'autre partie de serrage (31) et/ou qu'elle forme un constituant d'un porte-charge arrière.

15. Porte-charge arrière avec un dispositif d'accouplement de porte-charge selon l'une des revendications précédentes.
